Europäisches Patentamt

(19) European Patent Office

Office européen des brevets

(11) Publication number: **0 216 543 B1**

(12) **EUROPEAN PATENT SPECIFICATION**

(45) Date of publication of patent specification:
20.03.91 Bulletin 91/12

(51) Int. Cl.⁵: **C25D 11/08, G11B 5/62**

(21) Application number: 86306810.2

(22) Date of filing: 03.09.86

(54) **Method of manufacturing of an anodized memory disc substrate.**

(30) Priority: 04.09.85 JP 193953/85

(43) Date of publication of application:
01.04.87 Bulletin 87/14

(45) Publication of the grant of the patent:
20.03.91 Bulletin 91/12

(84) Designated Contracting States:
DE FR GB NL

(56) References cited:
DE-C- 631 886
FR-A- 2 278 790
GB-A- 1 464 857
GB-A- 2 136 448
US-A- 3 616 310
US-A- 4 256 547
US-A- 4 540 449

(73) Proprietor: Furukawa Aluminum Co., Ltd.
6-1, 2-chome, Marunouchi Chiyoda-ku
Tokyo100 (JP)

(72) Inventor: Miyamoto, Mitsuya
423-133 Shiromeguri
Kamakura-shi Kanagawa-ken (JP)
Inventor: Ooseki, Yasuyuki
c/o Furukawadenko-Dormitory 13-27
Sumiredaira
Hiratsuka-shi Kanagawa-ken (JP)
Inventor: Nabae, Motohiro Furukawa
Nakayasudoshataku 1-107
No. 251, Nakayasudo-machi Kiyotaki
Nikko-shi Tochigi-ken (JP)

(74) Representative: Laredo, Jack Joseph et al
Elkington and Fife Beacon House 113
Kingsway
London, WC2B 6PP (GB)

## Description

Background of the Invention

The present invention relates to an anodized memory disc substrate and to a method of manufacture thereof. In particular, the invention provides an anodized memory disc substrate, wherein the rate of growth of the anodic film is fast at a relatively low voltage, the hardness of the film is high, and the head crush resistance and heat resistance are also high.

Memory discs composed of aluminium or an aluminium alloy are used conventionally and discs of the coated type, which are manufactured by coating with magnetic film, are in general use. Recently, with the development of high-density recording, discs of the plating-plating type, plating-sputtering type and anodizing-sputtering type, for example, have come to attract greater attention. In these cases, the plating layer or the anodic film plays a role in which the layer or film compensates for the surface hardness of the aluminium or aluminium alloy.

In the case of such anodic film, there are three severe demands which are as follows :

(a) no occurrence of cracks as a result of heating, that is, a high heat resistance ;

(b) high hardness ; and

(c) no defects such as pits, for example, on the surface of the anodic film.

The heat resistance just mentioned (a) is needed at the time of formation of the thin-film magnetic recording medium ; this is because the recording medium has to be heated at 350°C in order to convert the $\alpha-Fe_2O_3$ to $\gamma-Fe_2O_3$ via $Fe_3O_4$.

The hardness (b) is a principal feature of the film. If the surface hardness is low, the substrate is dented due to collision with the magnetic head, that is, head crush causes damage to the magnetic recording medium.

Moreover, if there exist defects (c) such as surface pits, for example, undesirable recording defects are correspondingly generated.

Conventional anodic film produced by means of sulphuric acid has considerable advantages. Thus, its magnetic stability is excellent from the viewpoint of not carrying the magnetism, the corrosion resistance is also excellent, the hardness is high and the finish by polishing is also good. However, it has the significant shortcoming that cracks are apt to occur upon heating and, when cracks occur, innumerable recording errors are generated. For this reason, various treatment methods which are intented to avoid the occurence of cracks have been investigated, and an anodizing treatment in a chromic acid solution has been proposed (reference may be made, for example, to Japanese Unexamined Patent Publication No. Sho 59-171023 and Sho 59-180832).

However, with such anodic film obtained by means of chromic acid, the hardness is still insufficient, and there is a difficulty in the treatment behaviour. Thus, there is a shortcoming in that the rate of growth of the film is slow and, when attempts are made to raise the current density, high temperatures and high voltages are needed and the hardness of the film is insufficient.

US-A-3616310 describes inter alia the anodizing of an aluminium body in an electrolyte comprising 7 to 12% sulphuric acid and 0.25 to 0.8% chromic acid (that is 2.5 to 8.0 g/l), the balance being water. The temperature of the bath is stated to be 20 to 30°C and the resulting thickness of the anodic layer 0.3 mil (approximately 0.025 mm). There is no teaching however in this reference of the application of an anodizing process to memory disc substrates. Specifically, there is no teaching of the formation of anodic films using the method of the present invention to a minimum thickness of 4 μm, which are thereafter polished down to a minimum thickness of 3 μm.

DE-C-631886 discloses inter alia that chromic acid, which is a known anodizing agent, usually contains some sulphuric acid as an impurity (for example between 0.1 and 0.5 percent) in addition to other known impurities.

There is however no teaching in this document either of the application of the anodizing method to polished memory disc substrates.

An anodizing treatment by means of chromic acid solution alone has been carried out most frequently hitherto as described above and has been utilized for aeroplane members. Extremely thin film thicknesses are generally used, i.e., films which are not more than several um thick. In order to make such films thicker, it is necessary to increase the current density and to prolong the electrolyses time. Since the chromic acid mentioned above shows low electroconductivity, the solution temperature has to be raised or the electrolysis has to be conducted at high voltages to raise the current density.

The present inventors have found that, through treatment with a chromic acid-sulphuric acid to a chromic acid solution, a film which is sufficiently thick and has excellent heat resistance and hardness is formed at relatively low temperatures and low voltages in a short time.

As a result, an anodized memory disc substrate and method of manufacture thereof have been developed according to the invention, wherein the conventional shortcomings described above are avoided, the rate of growth of film is fast at a relatively low voltage, the anodic film has a high hardness and excellent heat resistance, and, further, the crush resistance is excellent from the viewpoint of hardness.

This anodic film has a higher heat resistance than conventional anodic film obtained by means of chromic acid.

Summary of the Invention

In one aspect, the present invention provides a method of manufacturing anodized memory disc substrate, which is characterized in that : (i) the anodizing treatment is effected on an aluminium or aluminium alloy disc substrate at a temperature of 30 to 90°C and a voltage of 25 to 90 V in a mixed acid solution comprising 10 to 200 g/l of chromic acid and 0.5 to 50 g/l preferably 0.5 to 10 g/l, of sulphuric acid, to form an anodic film with a film thickness of not less than 4 μm on the surface of the disc substrate, and (ii) the anodic film which is polished to a film thickness of at least 3 μm. Preferably, before, or after, the polishing step (ii), a heating step (iii) is carried out for not less than 10 minutes at 150 to 450°C.

Through manufacture in such a way, the hardness of the anodic film can be made higher than by the manufacturing method aforementioned.

The invention also covers a polished anodized memory disc substrate characterised by an anodic film of high heat resistance and hardness and a thickness of not less than 3 μm which is obtainable by the method defined above.

Detailed Description of the Invention

The anodizing treatment of an aluminium or aluminium alloy disc substrate is carried out in a mixed acid solution of 10 to 200 g/l of chromic acid with 0.5 to 50 g/l of sulphuric acid as described above. The electrolytic temperature is preferably 30 to 90°C and the electrolysis is desirably conducted by means of a direct current-constant voltage system, in which the electrolytic voltage is 25 to 90 V.

In the anodizing treatment of the invention, the reason why the concentration of chromic acid was made 10 to 200 g/l is that, if the concentration is below 10 g/l, so-called burning is apt to occur in anodizing and, if over 200 g/l, not only do the advantages of the invention disappear but also the loss of $CrO_3$ is increased to a level at which it becomes inconvenient. It is preferred to make the concentration 30 to 150 g/l. Moreover, the reason why the concentration of sulphuric acid was made 0.5 to 50 g/l is that, if the concentration is under 0.5 g/l, the effect of enhancing the electroconductivity of the solution cannot satisfactorily be obtained and ; if over 50 g/l, the heat resistance which is a characteristic of the original chromic acid film is reduced. It is preferred to make the concentration of sulphuric acid 0.5 to 10 g/l.

The reason why the electrolytic temperature was made 30 to 90°C is that, if the temperature is below 30°C, the heat resistance of the film is reduced and, if over 90°C, the hardness of the film is lowered. Furthermore, the reason why the electrolytic voltage was made 25 to 90 V is that, if the voltage is below 25V, the heat resistance of the film is reduced and, if over 90 V, the hardness of the film is lowered.

The reason why, after the anodic film is formed to a thickness of not less than 4 μm by carrying out the designated electrolysis, polishing is carried out and the thickness of film after the polishing is made not less than 3 μm is due to the facts that, if the thickness of the film after the polishing is below 3 μm, the head crush resistance is poor. Furthermore in order to make the film thickness after the polishing not less than 3 μm. The thickness of the anodic film formed through the designated electrolysis needs to be not less than 4 μm. Thus, if it is less than 4 μm, there is not sufficient margin to polish up the film at the time of the polishing so that a problem is left in the smoothness after polishing.

Moreover, the reason why, after the formation of the anodic film through the designated electrolysis, polishing is effected and, before or after it, heating is carried out for not less than 10 minutes at 150 to 450°C, is that the water adsorbed onto the anodic film is then removed by dehydration to increase the hardness of the film still more. Furthermore, the heating conditions are confined as stated above because, if the heating temperature is below 150°C, there is not a sufficient effect to allow the adsorbed water to dehydrate, however long the time may be, and, if over 450°C, the adsorbed water dehydrates but cracks occur in the film because of the high temperature. Less effect is exerted when the heating time is under 10 minutes.

The invention is illustrated by the following examples :

Example 1

Using an aluminium alloy for a memory disc (JIS A5086) having an outer diameter of 210 mm, an inner diameter of 100 mm and a thickness of 1.9 mm, the surface was processed to a mirror-like finish. Then, this was dipped into trichloroethylene to degrease the surface and the anodizing treatments shown in Table 1 (below) were carried out. The surface was then polished, washed with water and dried to manufacture the anodized memory disc substrates.

Of these substrates, the heat resistance and the hardness were determined. The results are put in Table 1 together.

Besides, for the judgement of heat resistance, heating was effected for 2 hours at 400°C and the occurrence of cracks in the film was observed. Thereby, one without cracks was marked by ○ and one in which cracks occurred by X. Moreover, as regards the hardness, the hardness of the section of film was measured by the use of a Micro Vickers Hardness tester.

EP 0 216 543 B1

Table 1

| | No. | Concentration (g/ℓ) | | Tempera-ture (°C) | Electrolytic voltage (V) | Electrolytic time (min) | Thickness of anodic film (μm) | | Characteristics | |
| --- | --- | --- | --- | --- | --- | --- | --- | --- | --- | --- |
| | | $CrO_3$ | $H_2SO_4$ | | | | After fomation of anodic film | After polishing | Heat resistance | Hard-ness |
| The in-vention | 1 | 15 | 0.2 | 85 | 55 | 45 | 11 | 9 | ○ | 380 |
| '' | 2 | 20 | 8.0 | 50 | 75 | 50 | 16 | 13 | ○ | 410 |
| '' | 3 | 20 | 2.5 | 75 | 85 | 25 | 9 | 8 | ○ | 390 |
| '' | 4 | 180 | 0.3 | 80 | 85 | 45 | 17 | 12 | ○ | 390 |
| '' | 5 | 150 | 9.0 | 45 | 60 | 60 | 16 | 14 | ○ | 400 |
| '' | 6 | 175 | 1.5 | 60 | 60 | 40 | 10 | 8 | ○ | 410 |
| '' | 7 | 50 | 1.0 | 80 | 75 | 35 | 11 | 9 | ○ | 410 |
| '' | 8 | 100 | 7.5 | 50 | 75 | 35 | 11 | 10 | ○ | 385 |
| '' | 9 | 75 | 5.0 | 60 | 80 | 30 | 10 | 8 | ○ | 400 |
| '' | 10 | 50 | 50 | 40 | 25 | 30 | 5 | 3 | ○ | 340 |
| '' | 11 | 100 | 10 | 40 | 30 | 60 | 8 | 6 | ○ | 360 |
| '' | 12 | 100 | 50 | 30 | 25 | 60 | 10 | 8 | ○ | 370 |
| '' | 13 | 200 | 5.0 | 40 | 40 | 15 | 4 | 3 | ○ | 330 |
| Compa-rison | 14 | 5 | 3.0 | 60 | 80 | 45 | 16 | 13 | Poor surface state | |
| '' | 15 | 50 | – | 75 | 60 | 80 | 12 | 10 | ○ | 220 |
| '' | 16 | 100 | 0.05 | 50 | 60 | 70 | 13 | 10 | ◑ | 250 |
| '' | 17 | 150 | 1.5 | 95 | 70 | 20 | 6 | 4 | ○ | 215 |
| '' | 18 | 50 | 0.5 | 20 | 80 | 40 | 14 | 12 | ✕ | 390 |
| '' | 19 | 100 | 2.0 | 75 | 100 | 10 | 4 | 3 | ○ | 220 |
| '' | 20 | 25 | 1.0 | 60 | 20 | 30 | 5 | 3 | ✕ | 400 |

As is evident from Table 1, it can be seen that the substrates for memory discs Nos. 1 to 13, inclusive, manufactured by the method of the invention have good heat resistance and excellent hardness of film as high as 330 to 410.

In contrast, in the comparison methods the conditions of which are outside those prescribed for the method of the invention, either the heat resistance or the hardness of the film is inferior. Thus, in the case of comparative method No. 14 where the concentration of chromic acid is low, the surface state is poor. Furthermore, in the case of comparative methods Nos. 15 and 16, where the concentration of sulphuric acid is low, in the case of comparative method No. 17, where the electrolytic temperature is high, and, in the case of comparative method No. 19, where the electrolytic voltage is high, the hardness of the film is low in all cases. In the case of comparative method No. 18, where the electrolytic temperature is low, and, in the case of comparative method No. 20 where the electrolytic voltage is low, the heat resistance is seen to be inferior in either case.

### Example 2

An aluminium alloy was used as a memory disc substrate (JIS A5086). The disc had an outer diameter of 210 mm, an inner diameter of 100 mm and a thickness of 1.9 mm. The surface of the disc was first processed to a mirror-like finish. The polished disc was then dipped into trichloroethylene to degrease it, and an anodizing treatment was carried out for 35 minutes at a temperature of 60 C and a voltage of 75 V in a mixed acid solution comprising 50 g/l of chromic acid and 0.75 g/l of sulphuric acid to form a film with a thickness of 11 μm. After washing with water and drying, heat treatments were carried out under the conditions shown in Table 2. Following this, the surface was polished, washed with water and dried to manufacture the anodized memory disc substrates. Of these substrates, the hardness of the film was determined similarly to Example 1. The results are shown in Table 2.

Table 2

| Manufacturing method | No. | Heating conditions | | Hardness of film |
|---|---|---|---|---|
| | | Temperature (°C) | Time (min) | |
| The invention | 21 | 200 | 30 | 435 |
| " | 22 | 250 | 90 | 440 |
| " | 23 | 400 | 10 | 450 |
| " | 24 | 350 | 60 | 440 |
| " | 25 | 150 | 120 | 430 |
| Comparison | 26 | No heating | | 410 |
| " | 27 | 100 | 20 | 415 |
| " | 28 | 200 | 5 | 415 |
| " | 29 | 500 | 10 | Frequent occurrence of cracks |

As is evident from Table 2, with films made by the method of the invention, Nos. 21 to 25, inclusive, where heating was effected for not less than 10 minutes at 150 to 450°C after the anodizing treatment, the hardness of the film is still further improved.

As described, according to the invention, an anodized memory disc substrate can be provided, wherein the shortcomings of the conventional magnetic disc substrates are avoided, the rate of growth of the film is fast at a relatively low voltage, the hardness of the film is high, and the head crush resistance and also the heat resistance are excellent. Therefore, the invention demonstrates remarkable and improved effects against the background of the state of the art.

## Claims

1. A method of manufacturing an anodized memory disc substrate characterized in that : (i) an anodizing treatment is carried out on an aluminium or aluminium alloy disc substrate at a temperature of 30 to 90°C and at a voltage of 25 to 90 V, in a mixed acid solution comprising 10 to 200 g/l of chromic acid and 0.5 to 50 g/l of sulphuric acid, to form an anodic film with a film thickness of not less than 4 μm on the surface of the disc substrate, and (ii) thereafter the deposited film is polished to a film thickness of not less than 3 μm.

2. A method according to Claim 1 in which 0.5 to 10 g/l sulphuric acid is used.

3. A method according to Claim 1 or 2, further characterised in that : (iii) before or after the polishing step (ii), the disc substrate is heated for not less than 10 minutes at 150 to 450°C.

## Ansprüche

1. Verfahren zur Herstellung eines anodisierten Trägers für Speicherscheiben, **dadurch gekennzeichnet, daß** (i) eine anodisierende Behandlung eines Scheibenträgers aus Aluminium oder einer Aluminiumlegierung bei einer Temperatur von 30 bis 90°C und einer Stromstärke von 25 bis 90 V in einer gemischten, sauren Lösung, die 10 bis 200 g/l Chromsäure und 0,5 bis 50 g/l Schwefelsäure enthält, durchgeführt wird, um einen anodischen Film mit einer Filmdicke von nicht weniger als 4 μm auf der Oberfläche des Scheibenträgers auszubilden, und (ii) danach der abgeschiedene Film bis auf eine Filmdicke von nicht weniger als 3 μm geschliffen wird.

2. Verfahren nach Anspruch 1, **dadurch gekennzeichnet**, daß 0,5 bis 10 g/l Schwefelsäure verwendet wird.

3. Verfahren nach Ansprüchen 1 oder 2, **dadurch gekennzeichnet**, daß weiterhin (iii) vor oder nach dem Schleifschritt (ii) der Scheibenträger für nicht weniger als 10 Minuten auf 150 bis 450°C erhitzt wird.

## Revendications

1. Un procédé de fabrication d'un substrat anodisé de disque de mémoire, caractérisé en ce que : (i) on effectue un traitement anodisant sur un substrat de disque en aluminium ou en alliage d'aluminium à une température de 30 à 90°C et à une tension de 25 à 90 Volts, dans une solution acide mixte comprenant 10 à 200 g/l d'acide chromique et 0,5 à 50 g/l d'acide sulfurique, pour former une couche anodique d'une épaisseur non inférieure à 4 μm sur la surface du substrat de disque, et (ii) on polit ensuite la couche déposée jusqu'à une épaisseur de couche non inférieure à 3 μm.

2. Un procédé selon la revendication 1, dans lequel on utilise de 0,5 à 10 g/l d'acide sulfurique.

3. Un procédé selon la revendication 1 ou 2, caractérisé en ce que, en outre, (iii) avant ou après l'étape de polissage (ii), on chauffe le substrat de disque pendant au moins 10 minutes à 150 à 400°C.